Europäisches Patentamt

European Patent Office

Office européen des brevets

(19)

(11) Publication number: **0 188 865 B1**

# EUROPEAN PATENT SPECIFICATION

(45) Date of publication of patent specification: **09.10.91**

(51) Int. Cl.⁵: **H04N 1/00, H04M 11/06, H04M 1/02**

(21) Application number: **85305095.3**

(22) Date of filing: **17.07.85**

(54) Information communication apparatus.

(30) Priority: **23.01.85 JP 10454/85**
**23.01.85 JP 10455/85**
**23.01.85 JP 10456/85**

(43) Date of publication of application:
**30.07.86 Bulletin 86/31**

(45) Publication of the grant of the patent:
**09.10.91 Bulletin 91/41**

(84) Designated Contracting States:
**DE FR GB IT NL SE**

(56) References cited:

**INTERNATIONAL CONFERENCE ON COMPUT-
ER COMMUNICATION, "Computer communi-
cation today to 1985", Stockholm, 12th-14th
August 1974, pages 345-349; R. JURK: "New
possibilities of data collection and data re-
trieval using telephone terminals in PABX
systems"**

**PATENT ABSTRACTS OF JAPAN, vol. 6, no.
264 (E-150)[1142], 23rd December 1982; &
JP-A-57 160 259**

(73) Proprietor: **TOKYO ELECTRIC CO. LTD.**
**2-6-13 Nakameguro Meguro**
**Tokyo(JP)**

(72) Inventor: **Izawa, Shoji**
**950-6, Kashiya Kannami**
**Tagata Shizuoka(JP)**
Inventor: **Kimura, Fujinori**
**888, Honaza-shimoicchoda**
**Numazu Shizuoka(JP)**
Inventor: **Takahama, Kazuhide**
**294-1, Takyo Ohhito**
**Tagata Shizuoka(JP)**
Inventor: **Yamashita, Hisakichi**
**892-65, Hirai Kannami**
**Tagata Shizuoka(JP)**
Inventor: **Manda, Takahiko**
**5-27, Kotobuki**
**Mishima Shizuoka(JP)**

(74) Representative: **Smith, Norman Ian et al**
**F.J. CLEVELAND & COMPANY 40-43 Chan-
cery Lane**
**London WC2A 1JQ(GB)**

## Description

BACKGROUND OF THE INVENTION

Field of the Invention

The present invention relates to an information communication apparatus provided with both telephone and facsimile functions integrated into a unit of smaller dimensions.

Description of the Prior Art

Some of the conventional facsimile sets have been provided with a speech function, but a telephone set has had to be used for such a speech function, i.e., the facsimile set and the telephone set have not been united in a body. Therefore, in the case where documents must be transmitted and received, a facsimile set has had to be connected to a telephone set, and thus, two separate apparatuses have so far been required.

Document "Patent abstracts of Japan, vol. 6, no. 264 (E-150) [1142], 23rd December 1982; & JP-A-57 160 259 (Ricoh K.K.) 02.10.1982" discloses a facsimile apparatus on top of which and adjacent to the original table part thereof is provided a telephone installation part.

Consequently, there has been such a disadvantage in the use of the prior art apparatuses that they have occupied too large a space to be installed on a business desk. And their use as a telephone set and a facsimile set has been made, in a manner, through this-or-that selection, and therefore, a demand such as on obtaining a hard copy of an image off hand in the middle of telephone conversation with the use of the apparatuses installed on a business desk has not been satisfied.

Further, handling of the original at the time of its transmission and the recording paper at the time of the reception has not been simple and disposal of the original transmitted and the record paper has been rather troublesome.

SUMMARY OF THE INVENTION

A primary objective of the present invention is the provision of an apparatus formed into smaller dimensions and operable to perform both telephone and facsimile functions.

Another objective of the invention is the provision of an apparatus wherein transmission and reception of originals can be performed off hand whenever necessary in the middle course of telephone conversation with the use of a handset.

A further objective of the invention is to facilitate the handling of an original for transmission and received information recording paper.

A still further objective of the invention is the provision of an information communication apparatus providing good operability.

An additional objective of the invention is the provision of an apparatus wherein feeding of the original to be transmitted and the received information recording paper is simplified.

Another objective of the invention is to attain driving of various movable parts by simple mechanism.

These objectives are met by an apparatus as defined in claim 1.

Other objectives of the invention will become apparent from the following description.

BRIEF DESCRIPTION OF THE DRAWINGS

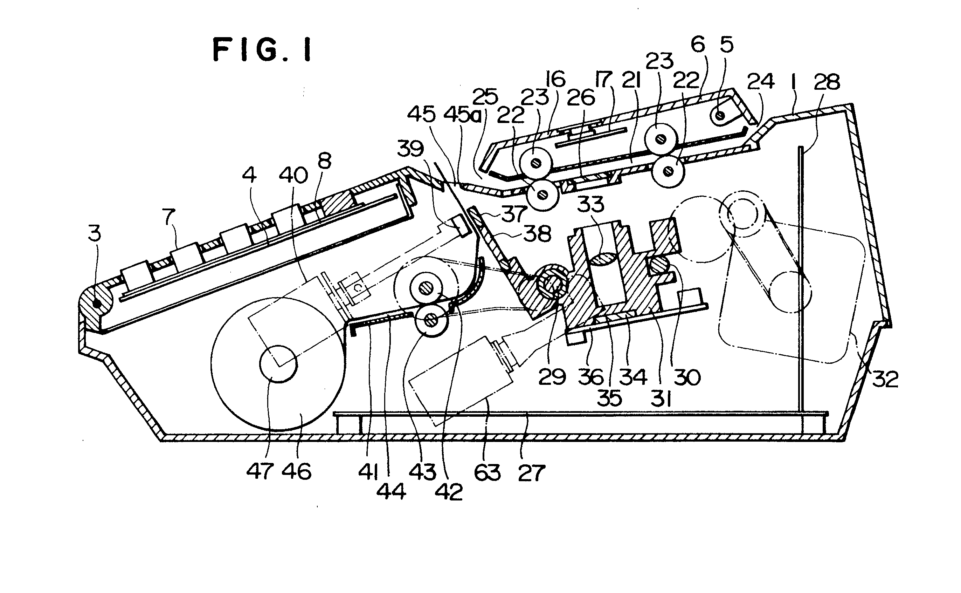

Fig. 1 is a longitudinal sectional side view showing an embodiment of the invention;

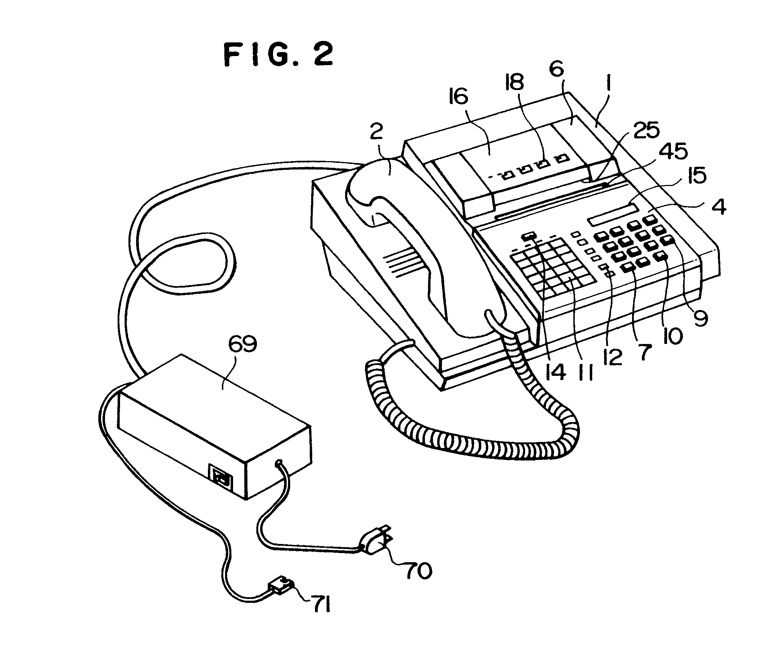

Fig. 2 is a perspective view showing overall structure;

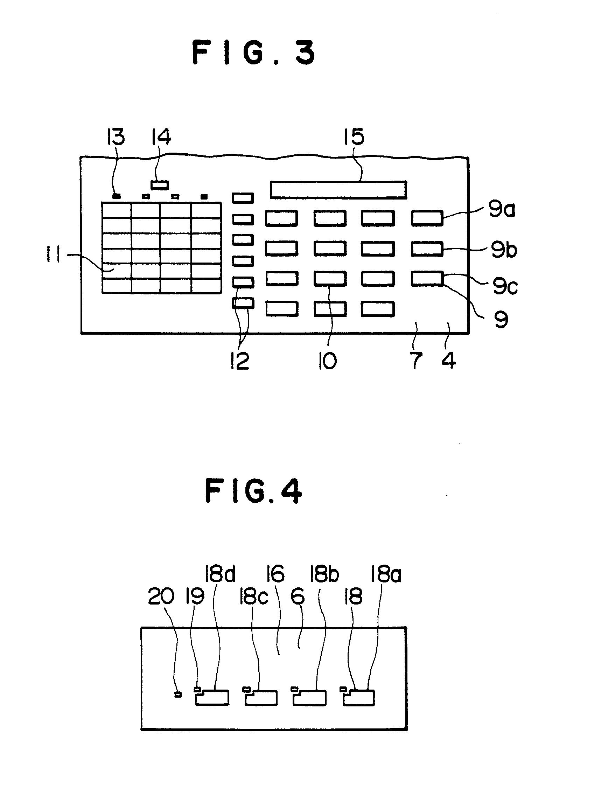

Fig. 3 is a plan view showing a call control panel;

Fig. 4 is a plan view showing a transmit/receive mode control panel;

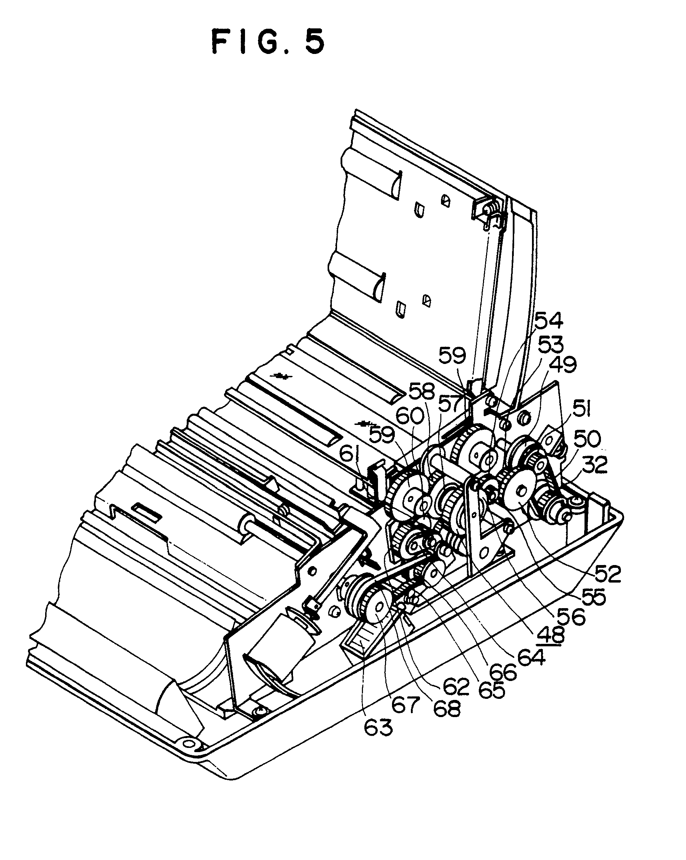

Fig. 5 is a partially cutaway view in perspective showing a body case.

Fig. 6 is an electrical block diagram; and

Fig. 7 is a flow chart showing an outline of operation.

DESCRIPTION OF THE PREFERRED EMBODIMENT

A body case 1 formed into a shape resembling a telephone set is provided with a handset 2 disposed on the left on the topside of the same. On the right on the topside of the body case 1, there is provided a call control panel board 4 in the front operably mounted on a support shaft 3 for opening, and a transmit/receive mode control panel board 6 in the rear operably mounted on a support shaft 5 for opening.

The topside of the call control panel board 4 is formed of a call control panel 7, and on the inside thereof is provided a printed circuit board 8. On the printed circuit board 8, there are provided various switches which are projecting out of the topside to form sets of control buttons. That is, on the call control panel 7, there are disposed three select keys 9, i.e., a hook key 9a, a clock key 9b, and a re-dial key 9c, from the top down, on the right, twelve dial keys 10 in the center, and a set of repertory indicators 11, which are arranged in a matrix of six rows and four columns, on the left. To the right of the repertory indicators 11 are vertically disposed six repertory dial keys 12, and at the top of the repertory indicators 11 are disposed four column indicators 13, one each for each column, and at the top of the column indicators 13 is disposed a column select key 14.

At the top of the dial keys 10, there is provided an LCD indicator 15 for indicating the number of the party on the other end of the line or the time of day.

The topside of the transmit/receive mode control panel board 6 is formed of a transmit/receive mode control panel 16, and control buttons are provided on a printed circuit board 17, which is fixed on the inside of the control panel 16, and projecting out of the topside. That is, on the control panel 16, there are disposed control keys 18, i.e., from right to left, a transmit key 18a, receive key 18b, receive select key 18c for selecting between automatic and manual receive, and a reset key 18d. The transmit key 18a is depressed when starting a transmission. This causes an original to be automatically fed to the position where the original is read. The receive key 18b is depressed when manual receive is to be started. If, then, there is no recording paper ready for use, an alarm is made and the reception is not started. The reset key 18d depressed when the alarm is made stops the alarm and restores the setting to the initial state. The receive select key 18c is set on the side of automatic receive when automatic reception is to be made. At the top left-hand corner of each of the control keys 18, there is provided one each indicator 19 for indicating the state of its corresponding key 18. At the left-hand end, there is provided a power indicator 20.

Between the underside of the transmit/receive mode control panel board 6 and the topside of the body case 1 is provided a predetermined space, which serves as an original feed passage 21.

Two original feed rollers 22 are provided in the body case 1 such that the rollers 22 are partly projecting out of the topside and two press rollers 23 operable in contact with the original feed rollers 22 are provided in the transmit/receive mode control panel board 6. At the rear end of the original feed passage 21 is provided an original insertion hole 24, a certain length of the passage 21 therefrom being downwardly sloped, and at the front end is provided an original discharge hole 25, which is located in the center on the topside of the body case 1. In the middle of the original feed passage 21, there is provided a read window 26 made of transparent glass or the like disposed on the topside of the body case 1.

Within the body case 1, there are provided a printed circuit board 27 horizontally disposed close to the bottom surface thereof and another printed circuit board 28 vertically disposed in the rear of the printed circuit board 27. In the center of the interior of the body case 1, there are provided two guide shafts 29, 30 being disposed horizontally.

On these guide shafts 29, 30, a carrier 31 is operably mounted for reciprocating motions. The carrier 31 is adapted to be driven by a motor 32, which as the driving member is installed at the rear portion of the body case 1, through a wire (not shown). While the motor 32 rotates in one direction or the other, the carrier 31 is adapted to travel from side to side responding to the change in the rotating directions of the motor 32.

In the carrier 31, there is provided an original reader device 35 located below the read window 26, the original reader device 35 being formed of a lens 33 and an image sensor 34 for reading the image of an original. The image sensor 34 is mounted on a printed circuit board 36 which is fixed to the carrier 31.

The carrier 31 is also provided with a printing head 38 fixed thereto to constitute a printer 37. The printing head 38 is a thermal head including a number of heating elements. Opposite to the printing head 38, there is provided a platen 39 in a flat plate form adapted to be advanced and retreated by means of a solenoid 40. Below the platen 39, there is provided a paper guide 41 which is upwardly curved as it goes forward, and in the middle of the paper guide 41, there are provided a recording paper feed roller 42 and a press roller 43. A recording paper feed passage 44 is formed by the paper guide 41, and at the end of the recording paper feed passage 44 is formed a recording paper delivery hole 45, which is located just in front of the original discharge hole 25. The rear edge portion of the recording paper delivery hole 45 is provided with a sharp edge and serves as a cutter 45a.

The space in the front, or under the call control panel board 4, within the body case 1 is formed into a recording paper containing portion 47 for containing recording paper 46 arranged in a roll.

On the right-hand side within the body case 1, there is provided a drive mechanism 48 composed of a number of gears engaged with each other. To begin with, a belt 50 is hung on the motor 32 and a pulley 49. A gear A 51 integral with the pulley 49 is put in mesh with a gear B 52, a gear C 53 integral with the gear B 52 is put in mesh with a gear D 54, and a gear E 55 integral with the gear D 54 is put in mesh with a gear F 56. The gear F 56 is coupled with a gear G 58 through a one-way clutch 57, and the gear G 58 is put in mesh with two gears H 59 which are integral with the original feed rollers 22. The one-way clutch 57 is second disconnecting means for disconnecting transmission of driving force to the original feed rollers 22 or the recording paper feed roller 42 while the original reader device 35 is reading an original at the time of transmission or while the printer 37 is printing at the time of reception.

In this way, by means of the one-way clutch 57 interposed between the motor 32 and the original feed rollers 22, it is arranged, while the motor 32 alternates its rotations in one direction and the other for providing the carrier 31 with reciprocating motions, that the original feed rollers 22 are not rotated when the carrier 31 travels for reading or writing and the original rollers 22 are rotated when the carrier 31 returns to its original position.

The gear H 59 controlled as described above in its rotation is put in mesh with a gear I 60, and a gear J 61 integral with the gear I 60 is put in mesh with a gear K 62. The gear K 62 is pivotally connected with the end of a lever 64, which is operably connected with a solenoid 63 for swinging, and the gear K 62 is thereby controlled in its position by the solenoid 63 and put in mesh or out of mesh with a gear L 65. The solenoid 63 is first disconnecting means for disconnecting transmission of the driving force of the drive mechanism 48 to the recording paper feed roller 42 at the time of transmission.

The gear L 65 is made integral with a pulley 66, and the pulley 66 is connected with a pulley 67 through a belt 68 hung thereon, the pulley 67 being integral with the recording paper feed roller 42. Thus, whether the recording paper 46 is to be fed or not is controlled by the solenoid 63.

On the backside of the body case 1, there is provided a power supply unit 69 connected thereto, and from the power supply unit 69 are drawn a connector to the power source and a connector to the telephone line.

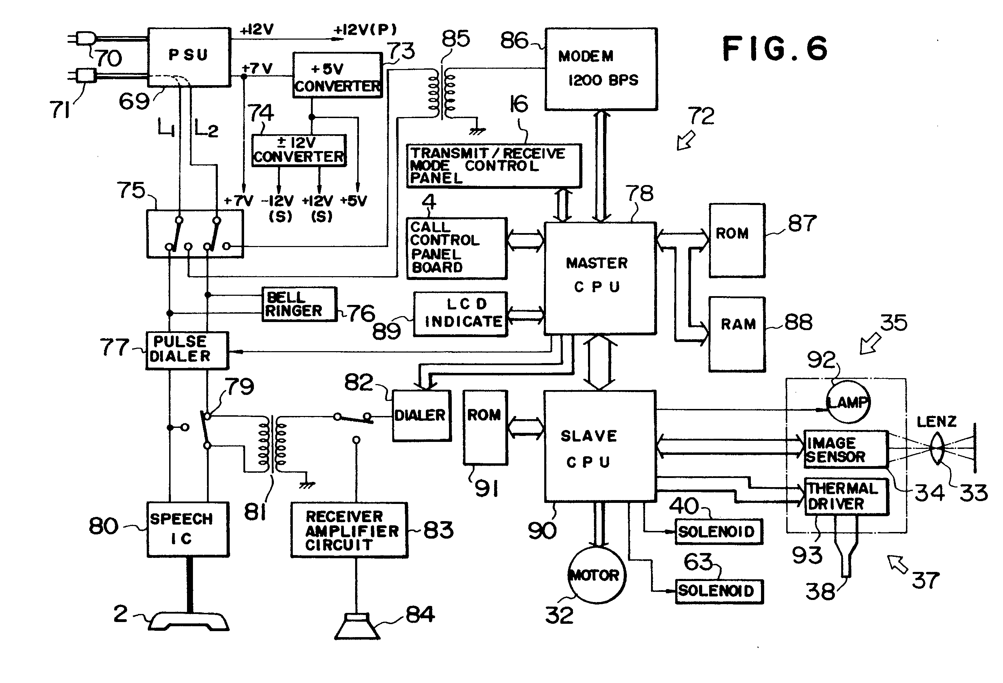

Now, elelctrical communication control means 72 will be described with reference to Fig. 6. The power supply unit 69 provides driving voltage of +12V for the motor 32 and solenoids 40, 63 and voltage of +7V for the printing head 38 and illumination, and causes a converter 73 to provide voltage of +5V for logical circuits and another converter 74 to provide stabilized voltages of +12V and -12V to be used for an operational amplifier, the sensor for reading, and as power for a MODEM, etc.

A CML relay 75 is connected to the telephone line through lines $L_1$ and $L_2$ drawn from the power supply unit 69. To the CML relay 75 are connected a bell ringer 76 and a pulse dialer 77. The pulse dialer 77 is connected with a master CPU 78 and connected, through a changeover switch 79, also with a speech IC 80 for operating the handset 2. The changeover switch 79 is selectively connected with a tone dialer 82 or a receiver amplifier circuit 83 through a transformer 81. The tone dialer 82 is connected with the master CPU 78, while the receiver amplifier circuit 83 is connected with a speaker 84.

The CML relay 75 is further connected through a transformer 85 with a MODEM 86, which is connected with the master CPU 78.

To the master CPU 78 are connected a ROM (Read Only Memory) 87 and a RAM (Randum Access Memory) 88 for storing read data or the like. The call control panel 4, transmit/ receive mode control panel 16, and various indicators 89 are also connected to the CPU 78.

A slave CPU 90 is connected to the master CPU 78. To the slave CPU 90 are connected a ROM 91 and the motor 32. And, the original reader device 35 formed of a lamp 92, the image sensor 34, and the lens 33, as well as the printer 37 formed of a thermal driver 93 and the printing head 38 of a thermal head type, are also connected to the slave CPU 90.

When calling a party with the described arrangement, the telephone number of the party to be called is put in with the dial key 10. The connection through the telephone line is then made by the well-known method. When the apparatus is used for telephone conversation, the CML relay 75 is set at the side of the hand set 2. If, in this state, it is desired to transmit or receive an original, or if, from the beginning, it is desired to use the apparatus as a facsimile apparatus, the control key 18 is operated. That is, the transmit key 18a is depressed at the time of transmission, and the receive key 18b is depressed at the time of reception.

If, now, the transmit key 18a is depressed with an original inserted into the original insertion hole 24, the original is automatically fed to a set position (not shown) and stops there. This is achieved by means of an original sensor provided in the apparatus. When every condition is made ready for transmission, the carrier 31 is driven for enabling the original reader device 35 to read the image of the original. Namely, the image of the original illuminated by the lamp 92 is received by the sensor 34 through the lens 33 and converted by the same into a binary signal to be input to the slave CPU 90. In the course of this operation, the drive mechanism 48 advances the original by one line each time when the carrier 31 makes one return motion as described before. Upon receipt of a certain amount of the data read from the original, the master CPU 78 makes data conversion by a well-known method such as the one-dimensional coding method. The signal processed through the data conversion is input to the MODEM 86 and the digital data input thereto are frequency-modulated or phase-modulated by the same to be input to the telephone line. The original is discharged from the original discharge hole 25 located in the center on the body case 1. Since this discharge position is located in the center, handling of the original is convenient. It is especially so since the original is discharged toward the operator.

If a party on the other end of the line has started to transmit an original and a signal is received by the apparatus on this end, the solenoids 40 and 63 are simultaneously energized. The solenoid 40 when energized advances the platen 39 toward the printing head 38 and the recording paper 46 is thereby brought into contact with the printing head 38. The solenoid 63 when energized brings the gear K 62 into mesh with the gear L 65 in the drive mechanism 48 and the motor 32 is thereby engaged with the roller 42. Thus, the recording paper 46 is advanced by one line each time when the carrier 31 makes one return motion, and the recording paper 46 is impressed with the record by the printing head 38 while the carrier 31 makes a motion in the opposite direction to the above. The recording paper on which the record has been printed is delivered through the recording paper delivery hole 45 toward the operator. Then, since the call control panel board 4 is relatively large in area, it serves as a tray for the delivered recording paper and the handling of the recording paper is thus made convenient.

When the gradually consumed recording paper 46 has come to be replaced with a new roll, the exchange of the recording paper 46 can be easily done by opening the call control panel board 4. That is, the recording paper containing portion 47 is arranged to be fully opened to the outside by opening the call control panel board 4, so that the recording paper 46 in a roll can be easily set in place. Because of the accessibility from above, it is made particularly convenient to pass the end of the recording paper 46 through the recording paper passage 44.

Since the original feed passage 21 can also be entirely opened by opening the transmit/receive mode control panel board 6, there is no trouble with jamming of the original, or the like.

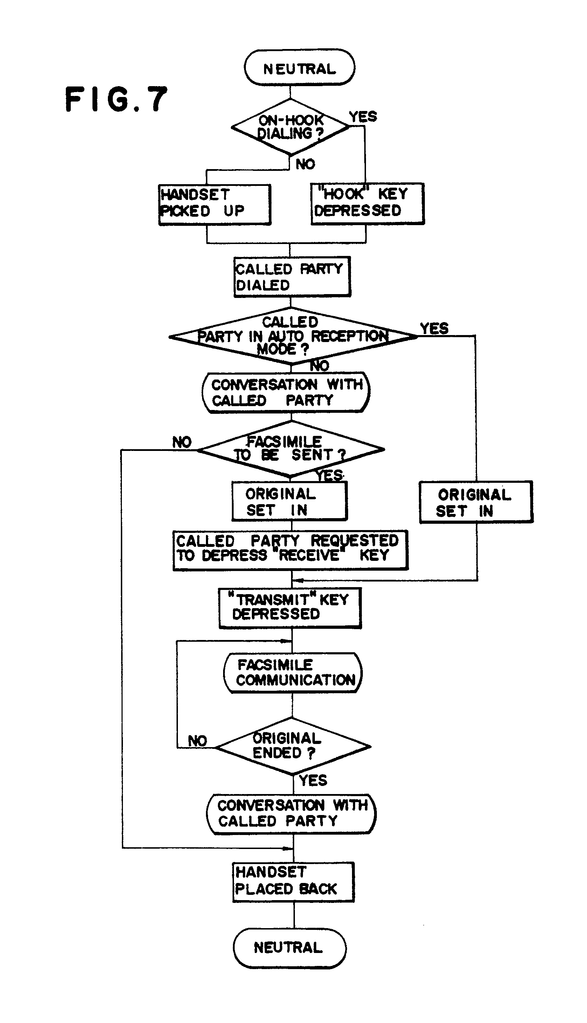

Operation of the present apparatus will now be described from another angle referring to Fig. 7. In Fig. 7, NEUTRAL means the state of the handset 2 put back in place whereby the apparatus is not connected with the telephone line. First, dialing is made for calling a specific party. Since the present apparatus is provided with a received speech amplifying feature, an on-hook dialing is possible therewith. That is, the caller, by depressing the hook key 9a, is enabled to effect the dialing without picking up the handset 2, but just listening to tones from the line through the speaker 84. If, then, the apparatus of the called party is set in the automatic reception mode, the caller can acknowledge that that apparatus has entered into the communication mode upon hearing a bleep sound following several times of ringing sounds. Then, if an original to be sent is set in the calling party's apparatus and the transmit key 18a thereon is depressed, the facsimile transmission is started. When transmission of the original is finished and there is no more original to be sent, the line is automatically switched back to the side of the handset, and if the handset is hung up, the line is disconnected.

If the apparatus of the called party when called is not in the automatic receive mode, the caller can converse with the person of the called party who comes to the phone and, when it becomes necessary, request the person to depress his reception key. If the transmit key 18a is depressed by the caller upon hearing a bleep sound, the facsimile transmission is started. When the transmission of the original is ended, the line is switched back to the side of the handset 2. Thereupon, the caller can converse with the called person once more. If a communication line of a frequency-division multiplexing system is used, the telephone conversation can be made during the facsimile transmission.

As described above, the present apparatus is of a smaller size but includes both the telephone and facsimile functions combined therein. Therefore, an individual can handle this apparatus on his business desk to write and send a memo, or send a bill or map, during telephone conversation. Thus, it is enabled to make a new type of transmission via the telephone line.

In the present invention, as apparent from the above description, the call control panel for selecting and dialing the number of the party to be called through a telephone network and the transmit/receive mode control panel for establishing a receive mode for receiving transmission from the party on the other end of the line and a transmit mode for making transmission to that party are disposed on the topside of the body case and the electrical communication control means, the original reader mechanism, and the received information recorder mechanism are included within the body case, whereby functions as a telephone set and as a facsimile set are combined therein, and further, the original discharge hole communicating with the original feed passage and the recording paper delivery hole communicating with the received information recording paper passage are disposed in the center on the topside of the body case. Thus, enabled to design the assemblies within the body case to be well distributed to the front portion and the rear portion, the overall dimensions of the body case has been made smaller, and therefore, the apparatus when placed on a business desk is as small as close to an ordinary telephone set occupying just a small space, and in addition, handling of the original and the recording paper has been made very convenient.

**Claims**

1. An information communication apparatus comprising:

a body case (1) having a call control panel (7) for selecting and calling a telephone number of a party to be called through a telephone network and a transmit/receive mode control panel (16) for establishing a transmit mode and a receive mode for images transmitted to and from the called party disposed on the topside thereof;

electrical communication control means disposed within said body case for controlling transmission and reception for both telephone and facsimile functions;

a handset (2) disposed on the topside of said body case (1) and connected with said electrical communication control means;

an original reader mechanism (35) disposed within said body case including an original reader device facing on a feed passage (21) for an original to be transmitted;

a received information recorder mechanism (41-47) disposed within said body case including a printer (37) facing on a passage for received information recording paper (46),

an original discharge hole (25) from the original feed passage (21) disposed in the center on the topside of said body case; and

a recording paper delivery hole (45) from the received information recording paper passage disposed adjacent to said original discharge hole.

2. An information communication apparatus according to claim 1, wherein said handset (2) is disposed on the left-hand side on the body case (1) with its hand-held direction arranged in the longitudinal direction, said received information recorder mechanism (41-47) is disposed at the front portion on the right-hand side within said body case, and said original reader mechanism (35) is disposed at the rear portion on the right-hand side within the body case.

3. An information communication apparatus according to claim 1, wherein an original insertion hole (24) to the feed passage for an original to be transmitted is disposed at the rear portion on the body case.

4. An information communication apparatus according to claim 3, wherein said original insertion hole (24) to the feed passage for an original to be transmitted is arranged to be downwardly sloped.

5. An information communication apparatus according to claim 1, wherein said recording paper delivery hole (45) is arranged to be sloped toward the front of the apparatus so that the recording paper is discharged on to said call control panel (7).

6. An information communication apparatus according to claim 1, wherein the feed passage (24) for an original to be transmitted is formed between the transmit/ receive mode control panel (16) and the body case (1), and the transmit/receive mode control panel is adapted to be movable for opening.

7. An information communication apparatus according to claim 1, wherein said call control panel (7) is located in the front of said original discharge hole and said recording paper delivery hole (45).

8. An information communication apparatus according to claim 1, wherein said call control panel together with a printed circuit board (18) mounted thereon is adapted to be movable for opening and closing and a recording paper containing portion is formed below said call control panel.

9. An information communication apparatus according to claim 1, wherein said transmit/receive mode control panel (16) and said call control panel (7) are adapted to be movable for opening and closing in a manner like hinged double doors are opened and closed.

10. An information communication apparatus according to claim 1, wherein said transmit/receive mode control panel (16) is located in the rear of said original discharge hole and recording paper delivery hole.

11. An information communication apparatus according to claim 1, wherein the feed passage (24) for an original to be transmitted is formed between the transmit/ receive mode control panel (16) and the body case (1).

12. An information communication apparatus according to claim 11, wherein said original reader mechanism is disposed below the feed passage (24) for an original to be transmitted.

13. An information communication apparatus according to claim 1, wherein said call control panel (7) is located in the front of said original discharge hole (25) and recording paper delivery hole (45), and said transmit/receive mode control panel (16) is located in the rear of said original discharge hole (25) and recording paper delivery hole (45).

14. An information communication apparatus according to claim 1, wherein the topside of said body case (1) is arranged to be lower in the front and higher in the rear.

15. An information communication apparatus according to claim 1, wherein said received information recorder mechanism (41-47) having a recording paper containing portion is located in the front portion within the body case '(1), said original reader mechanism (35) is located in the rear portion within the body case, and the topside of the body case is arranged to be sloped down from the rear to the front.

16. An information communication apparatus according to claim 1, wherein original feed rollers (22,23) are provided on the feed passage for an original to be transmitted, a recording paper feed roller (42) is provided on a passage (44) for received information recording paper, a drive mechanism (48) is provided in connection with the original feed rollers and the recording paper feed roller, and first disconnecting means (63) is provided for disconnecting transmission of driving force from the drive mechanism (48) to the recording paper feed roller (42) at the time of transmission of an original.

17. An information communication apparatus according to claim 16, wherein the drive mechanism (48) is adapted to be driven by one motor.

18. An information communication apparatus according to claim 16, wherein said handset is disposed on the left-hand side on the body case (1) and said drive mechanism (48) is disposed on the right-hand side within said body case.

19. An information communication apparatus according to claim 16, wherein second disconnecting means (57) is provided for disconnecting the transmission of driving force to the original feed rollers (22,23) or the recording paper feed roller (42) while the original reader device is reading an original at the time of transmission or the printer is printing at the time of reception.

20. An information communication apparatus according to claim 1, wherein a printing head (38) including a number of printing elements to form the printer (37) is mounted on a carrier (31) reciprocating along a platen (39) and the original reader mechanism (35) is mounted on the carrier.

21. An information communication apparatus according to claim 20, wherein pressure means (40) operable to press the platen (39) against the printing head is provided.

22. An information communication apparatus according to claim 20, wherein the original reader mechanism (35) mounted on the carrier (31) is located below the feed passage (24) for an original to be transmitted.

**Revendications**

1. Un appareil pour la communication d'informations comprenant :

un boîtier (1) présentant un panneau de commande d'appel (7) pour sélectionner et appeler un numéro de téléphone d'un correspondant devant être appelé par l'intermédiaire d'un réseau téléphonique et un panneau de commande de mode émission/réception (16) pour établir un mode d'émission et un mode de réception pour des images transmises vers et à partir d'un correspondant appelé disposé sur le dessus de celui-ci ;

des moyens électriques de commande de communication disposés à l'intérieur dudit boîtier pour commander l'émission et la réception pour à la fois les fonctions téléphone et télécopie ;

un combiné téléphonique (2) disposé sur le dessus dudit boîtier (1) et relié auxdits moyens électriques de commande de communication ;

un mécanisme de lecture d'original (35) disposé à l'intérieur dudit boîtier comprenant un dispositif de lecture d'original faisant face à un passage d'alimentation (21) pour un original devant être émis ;

un mécanisme d'enregistrement de l'information reçue (41-47) disposé à l'intérieur dudit boîtier comprenant une imprimante (37) faisant face à un passage pour le papier d'enregistrement de l'information reçue (46) ;

un trou de sortie de l'original (25) du passage d'alimentation de l'original (21) disposé au centre de la partie supérieure dudit boîtier ; et

un trou de sortie du papier d'enregistrement (45) du passage du papier d'enregistrement de l'information reçue disposé de manière adjacente audit trou de sortie de l'original.

2. Un appareil pour la communication d'informations selon la revendication 1, dans lequel ledit combiné téléphonique (2) est disposé sur le côté gauche du boîtier (1) dont le sens de tenue à la main est disposé dans la direction longitudinale, ledit mécanisme d'enregistrement de l'information reçue (41-47) est disposé à la partie avant sur le côté droit à l'intérieur dudit boîtier, et ledit mécanisme de lecture de l'original (35) est disposé à la partie arrière sur le côté droit à l'intérieur du boîtier.

3. Un appareil pour la communication d'informations selon la revendication 1, dans lequel un trou d'introduction d'un original (24) vers le passage d'alimentation d'un original devant être émis est disposé à la partie arrière sur le boîtier.

4. Un appareil pour la communication d'informations selon la revendication 3, dans lequel ledit trou d'introduction d'un original (24) vers le passage d'alimentation d'un original devant être émis est disposé de manière inclinée vers le bas.

5. Un appareil pour la communication d'informations selon la revendication 1, dans lequel ledit trou de sortie du papier d'enregistrement (45) est disposé de manière à être incliné en direction de l'avant de l'appareil de sorte que le papier d'enregistrement sort sur ledit panneau de commande d'appel (7).

6. Un appareil pour la communication d'informations selon la revendication 1, dans lequel le passage d'alimentation (24) pour un original devant être émis est formé entre le panneau de commande de mode émission/réception (16) et le boîtier (1), et le panneau de commande de mode émission/réception est adapté de manière à être mobile pour être ouvert.

7. Un appareil pour la communication d'informations selon la revendication 1, dans lequel ledit panneau de commande d'appel (7) est situé à l'avant dudit trou de sortie de l'original et dudit trou de sortie du papier d'enregistrement (45).

8. Un appareil pour la communication d'informations selon la revendication 1, dans lequel ledit panneau de commande d'appel en même temps qu'une carte de circuit imprimé (8) montée sur celui-ci est prévu pour être mobile, pour être ouvert et fermé et une partie contenant le papier d'enregistrement est formée en dessous dudit panneau de commande d'appel.

9. Un appareil pour la communication d'informations selon la revendication 1, dans lequel ledit panneau de commande de mode émission/réception (16) et ledit panneau de commande d'appel (7) sont prévus pour être mobiles pour être ouverts et fermés de la même manière que des portes doubles à charnières sont ouvertes et fermées.

10. Un appareil pour la communication d'informations selon la revendication 1, dans lequel ledit panneau de commande de mode émission/réception (16) est situé sur l'arrière dudit trou de sortie d'un original et du trou de sortie de papier d'enregistrement.

11. Un appareil pour la communication d'informations selon la revendication 1, dans lequel le passage d'alimentation (24) pour un original devant être émis est formé entre le panneau de commande de mode émission/réception (16) et le boîtier.

12. Un appareil pour la communication d'informations selon la revendication 11, dans lequel ledit mécanisme de lecture d'un original est disposé au dessous du passage d'alimentation (24) pour un original devant être émis.

13. Un appareil pour la communication d'informations selon la revendication 1, dans lequel ledit panneau de commande d'appel (7) est situé sur l'avant dudit trou de sortie d'un original (25) et dudit trou de sortie du papier d'enregistrement (45), et ledit panneau de commande de mode d'émission/réception (16) est situé à l'arrière dudit trou de sortie de l'original (25) et dudit trou de sortie du papier d'enregistrement (45).

14. Un appareil pour la communication d'informations selon la revendication 1, dans lequel la partie supérieure dudit boîtier (1) est disposée pour être plus basse sur l'avant et plus haute sur l'arrière.

15. Un appareil pour la communication d'informations selon la revendication 1, dans lequel ledit mécanisme d'enregistrement de l'information reçue (41-47) comportant une partie contenant le papier d'enregistrement est situé dans la partie avant à l'intérieur du boîtier (1), ledit mécanisme de lecture de l'original (35) est situé dans la partie arrière à l'intérieur du boîtier, et la partie supérieure du boîtier est disposée pour être inclinée vers le bas à partir de l'arrière vers l'avant.

16. Un appareil pour la communication d'informations selon la revendication 1, dans lequel des rouleaux d'alimentation de l'original (22, 23) sont disposés sur le passage d'alimentation pour un original devant être émis, un rouleau d'alimentation de papier d'enregistrement (42) est prévu sur un passage (44) pour le papier d'enregistrement de l'information reçue, un mécanisme d'entraînement (48) est disposé en liaison avec les rouleaux d'alimentation d'un original et le rouleau d'alimentation du papier d'enregistrement, et un premier moyen de débrayage (63) est prévu pour débrayer la transmission de la force d'entraînement issue du mécanisme d'entraînement (48) vers le rouleau d'alimentation du papier d'enregistrement (42) au moment de l'émission d'un original.

17. Un appareil pour la communication d'informations selon la revendication 16, dans lequel le mécanisme d'entraînement (48) est prévu pour être entraîné par un moteur.

18. Un appareil pour la communication d'informations selon la revendication 16, dans lequel ledit combiné téléphonique est disposé sur le côté gauche du boîtier (1) et ledit mécanisme d'entraînement (48) est disposé sur le côté droit à l'intérieur dudit boîtier.

19. Un appareil pour la communication d'informations selon la revendication 16, dans lequel un second moyen de débrayage (57) est prévu pour débrayer la transmission de la force d'entraînement aux rouleaux d'alimentation d'un original (22, 23) ou au rouleau d'alimentation du papier d'enregistrement (42) lorsque le dispositif de lecture d'un original est en train de lire un original au moment de l'émission ou lorsque l'imprimante est en train d'imprimer au moment de la réception.

20. Un appareil pour la communication d'informations selon la revendication 1, dans lequel une tête d'impression (38) comprenant un certain nombres d'éléments d'impression pour constituer l'imprimante (37) est montée sur un chariot (31) animé d'un mouvement de va-et-vient le long d'une plaque d'impression (39) et le mécanisme de lecture d'un original (35) est monté sur le chariot.

21. Un appareil pour la communication d'informations selon la revendication 20, dans lequel on prévoit un moyen de pression (40) pouvant être mis en oeuvre pour presser la plaque d'impression (39) contre la tête d'impression.

22. Un appareil pour la communication d'informations selon la revendication 20, dans lequel le mécanisme de lecture d'un original (35) monté sur le chariot (31) est situé au dessous du passage d'alimentation (24) pour un original devant être émis.

**Patentansprüche**

1. Eine Informations-/Kommunikationsvorrichtung, mit:

einem Grundkörpergehäuse (1), welches eine Anrufsteuerkonsole (7) zum Auswählen und Anrufen einer Telefonnummer eines anzurufenden Partners über ein Telefonnetzwerk und eine Übertragungs-/Empfangsmodussteuerkonsole (16) zum Einstellen eines Übertragungsmodus und eines Empfangsmodus für Bilder, die zu dem und von dem angerufenen Partner übertragen werden, angeordnet auf seiner Oberseite, aufweist;

einer innerhalb des Hauptkörpergehäuses angeordneten elektrischen Kommunikationssteuereinrichtung, die zum Steuern der Übertragung und des Empfanges sowohl für Telefon- als auch Facsimilefunktionen;

einem Hörer (2), der auf der Oberseite des Hauptkörpergehäuses (1) angeordnet und mit der elektrischen Kommunikationssteuereinrichtung verbunden ist;

einem Originallesemechanismus (35), der innerhalb des Hauptkörpergehäuses angeordnet ist, und eine Originalleseeinrichtung enthält, die einem Zuführungsdurchgang (21) für ein zu übertragendes Original zugewandt ist;

einem Aufzeichnungsmechanismus (41 - 47) für empfangene Information, welcher innerhalb des Hauptkörpergehäuses angeordnet ist und einen Drucker (37) enthält, der einem Durchgang für Aufzeichnungspapier (46) für empfangene Information zugewandt ist;

einer Originalausgabeöffnung (25) des Originalzuführungsdurchganges (21), welche in der Mitte der Oberseite des Hauptkörpergehäuses angeordnet ist; und einer Aufzeichnungspapierausgabeöffnung (45) des Durchgangsweges für Aufzeichnungspapier für empfangene Information, welche angrenzend an die Originalausgabeöffnung angeordnet ist.

2. Eine Informations-/Kommunikationsvorrichtung nach Anspruch 1, wobei der Hörer (2) auf der linken Seite auf dem Hauptkörpergehäuse (1) angeordnet ist, wobei seine Handgriffrichtung in Längsrichtung vorgesehen ist, der Aufzeichnungsmechanismus (41 - 47) für empfangene Information im vorderen Bereich auf der rechten Seite innerhalb des Hauptkörpergehäuses angeordnet ist, und wobei der Originallesemechanismus (35) im hinteren Bereich auf der rechten Seite innerhalb des Hauptkörpergehäuses angeordnet ist.

3. Eine Informations-/Kommunikationsvorrichtung nach Anspruch 1, wobei eine Originaleinführungsöffnung (24) zu dem Zuführungsdurchgang für ein Original, das zu übertragen ist, im hinteren Bereich des Hauptkörpergehäuses angeordnet ist.

4. Eine Informations-/Kommunikationsvorrichtung nach Anspruch 3, wobei die Originaleinführungsöffnung (24) zu dem Zuführungsdurchgang für ein zu übertragendes Original nach unten abgeschrägt vorgesehen ist.

5. Eine Informations-/Kommunikationsvorrichtung nach Anspruch 1, wobei die Aufzeichnungspapierausgabeöffnung (45) abgeschrägt zur Front der Vorrichtung vorgesehen ist, so daß das Aufzeichnungspapier auf die Anrufsteuerkonsole (7) entladen wird.

6. Eine Informations-/Kommunikationsvorrichtung nach Anspruch 1, wobei der Zuführugsdurchgang (21) für ein zu übertragendes Original zwischen der Übertragungs-/Empfangsmodussteuerkonsole (16) und dem Hauptkörpergehäuse (1) gebildet ist, und die Übertragungs-/Empfangsmodussteuerkonsole dazu vorgesehen ist, zum Öffnen bewegbar zu sein.

7. Eine Informations-/Kommunikationsvorrichtung nach Anspruch 1, wobei die Anrufsteuerkonsole (7) vor der Originalausgabeöffnung und der Ausgabeöffnung (45) für Aufzeichnungspapier angeordnet ist.

8. Eine Informations-/Kommunikationsvorrichtung nach Anspruch 1, wobei die Anrufsteuerkonsole zusammen mit einer gedruckten, daran angebrachten Leiterplatte (8) dazu vorgesehen ist, zum Öffnen und Schließen bewegbar zu sein, und ein Aufzeichnungspapier enthaltender Bereich unterhalb der Anrufsteuerkonsole gebildet ist.

9. Eine Informations-/Kommunikationsvorrichtung nach Anspruch 1, wobei die Übertragungs-/Empfangsmodussteuerkonsole (16) und die Anrufsteuerkonsole (7) dazu vorgesehen sind, zum Öffnen und Schließen in der Art, wie Doppelschwingtüren geöffnet und geschlossen werden, bewegbar zu sein.

10. Eine Informations-/Kommunikationsvorrichtung nach Anspruch 1, wobei die Übertragungs-/Empfangsmodussteuerkonsole (16) hinter der Originalausgabeöffnung und der Ausgabeöffnung für das Aufzeichnungspapier angeordnet ist.

11. Eine Informations-/Kommunikationsvorrichtung nach Anspruch 1, wobei der Zuführungsdurchgang (24) für ein zu Übertragendes Original zwischen der Übertragungs-/Empfangsmodussteuerkonsole (16) und dem Hauptkörpergehäuse angeordnet ist.

12. Eine Informations-/Kommunikationsvorrichtung nach Anspruch 11, wobei der Originallesemechanismus unterhalb des Zuführungsdurchganges (24) für ein zu übertragendes Original angeordnet ist.

13. Eine Informations-/Kommunikationsvorrichtung nach Anspruch 1, wobei die Anrufsteuerkonsole (7) vor der Originalausgabeöffnung (25) und der Ausgabeöffnung (45) für Aufzeichnungspapier angeordnet ist, und die Übertragungs-/Empfangsmodussteuerkonsole (16) hinter der Originalausgabeöffnung (25) und der Ausgabeöffnung (45) für das Aufzeichnungspapier angeordnet ist.

14. Eine Informations-/Kommunikationsvorrichtung nach Anspruch 1, wobei die Oberseite des Hauptkörpergehäuses (1) dazu vorgesehen ist, auf der Vorderseite niedriger und auf der Hinterseite höher zu sein.

15. Eine Informations-/Kommunikationsvorrichtung nach Anspruch 1, wobei der Aufzeichnungsmechanismus (41 - 47) für empfangene Information, welcher einen Aufzeichnungspapier enthaltenden Bereich aufweist, in dem vorderen Teil innerhalb des Hauptkörpergehäuses (1) angeordnet ist, wobei der Originallesemechanismus (35) in dem hinteren Teil innerhalb des Hauptkörpergehäuses angeordnet ist, und die Oberseite des Hauptkörpergehäuses dazu vorgesehen ist, von hinten nach vorne abgeschrägt zu sein.

16. Eine Informations-/Kommunikationsvorrichtung nach Anspruch 1, wobei Originalzuführungsrollen (22, 23) in dem Zuführungsdurchgang für ein zu übertragendes Original vorgesehen sind, eine Aufzeichnungspapierzuführungsrolle (42) in einem Durchgang (44) für Aufzeichnungspapier für empfangene Information vorgesehen ist, ein Antriebsmechanismus (48) in Verbindung mit den Originalzuführungsrollen und den Aufzeichnungspapierzuführungsrollen vorgesehen ist, und eine erste Entkopplungseinrichtung (63) zum Aufheben der Übertragung der Antriebskraft von dem Antriebsmechanismus (48) zu der Aufzeichnungspapierzuführungsrolle (42) zur Zeit der Übertragung von einem Original vorgesehen ist.

17. Eine Informations-/Kommunikationsvorrichtung nach Anspruch 16, wobei der Antriebsmechanismus (48) dazu vorgesehen ist, durch einen Motor angetrieben zu werden.

18. Eine Informations-/Kommunikationsvorrichtung nach Anspruch 16, wobei der Hörer auf der linken Seite des Hauptkörpergehäuses (1) und der Antriebsmechanismus (48) auf der rechten Seite innerhalb des Hauptkörpergehäuses angeordnet ist.

19. Eine Informations-/Kommunikationsvorrichtung nach Anspruch 16, wobei eine zweite Entkopplungseinrichtung (57) zum Aufheben der Übertragung von Antriebskraft auf die Originalzuführungsrollen (32, 23) oder die Aufzeichnungspapierzuführungsrolle (42), während die Originalleseeinrichtung ein Original zur Zeit der Übertragung liest oder der Drucker zur Zeit des Empfanges druckt, vorgesehen ist.

20. Eine Informations-/Kommunikationsvorrichtung nach Anspruch 1, wobei ein Druckerkopf (38), welcher eine Anzahl von Druckerelementen, um den Drucker (37) zu bilden, enthält, auf einem Träger (31), welcher sich längs einer Platte (39) hin- und herbewegt, montiert ist, und der Originallesemechanismus (35) auf dem Träger montiert ist.

21. Eine Informations-/Kommunikationsvorrichtung nach Anspruch 20, wobei eine Preßeinrichtung (40), die in der Lage ist, die Platte (39) gegen den Druckerkopf zu pressen, vorgesehen ist.

22. Eine Informations-/Kommunikationsvorrichtung nach Anspruch 20, wobei der Originallesemechanismus (35), der auf den Träger (31) montiert ist, unterhalb des Zuführungsdurchganges (24) für ein zu übertragendes Original angeordnet ist.

# FIG. 1

# FIG. 2

EP 0 188 865 B1

# FIG. 3

# FIG. 4

14

# FIG. 5

FIG.6

# FIG.7

NEUTRAL

ON-HOOK DIALING ?

YES → "HOOK" KEY DEPRESSED

NO → HANDSET PICKED UP

CALLED PARTY DIALED

CALLED PARTY IN AUTO RECEPTION MODE ?

YES → ORIGINAL SET IN

NO → CONVERSATION WITH CALLED PARTY

FACSIMILE TO BE SENT ?

NO

YES → ORIGINAL SET IN

CALLED PARTY REQUESTED TO DEPRESS "RECEIVE" KEY

"TRANSMIT" KEY DEPRESSED

FACSIMILE COMMUNICATION

ORIGINAL ENDED ?

NO

YES → CONVERSATION WITH CALLED PARTY

HANDSET PLACED BACK

NEUTRAL